# EUROPEAN PATENT APPLICATION

(11) **EP 4 707 100 A1**
(43) Date of publication of application: **11.03.2026**
(21) Application number: 24814013.9
(22) Date of filing: 19.04.2024
(51) Int. Cl.: B60W 30/09

(54) **VEHICLE CONTROL METHOD AND RELATED DEVICE**

(30) Priority: 30.05.2023 CN 202310626641
(71) Applicant: Shenzhen Yinwang Intelligent Technologies Co., Ltd., Shenzhen, Guangdong 518110 (CN)
(72) Inventor: WANG, Jun, Shenzhen, Guangdong 518129 (CN); HAN, Bai, Shenzhen, Guangdong 518129 (CN); GUO, Linchuan, Shenzhen, Guangdong 518129 (CN)
(74) Representative: MERH-IP Matias Erny Reichl Hoffmann Patentanwälte PartG mbB
(86) International application number: PCT/CN2024/088729
(87) International publication number: WO 2024/244807

(57) **Abstract**

A vehicle control method and a related device are provided. The vehicle control method includes: obtaining first traveling information of a target vehicle and second traveling information of a rear vehicle of the target vehicle, predicting, based on the first traveling information and the second traveling information, a first collision parameter of collision between the rear vehicle and the target vehicle, and when the first collision parameter is less than or equal to a first threshold, controlling the target vehicle, to enable the first collision parameter to be greater than the first threshold. In other words, when a rear collision risk is identified, the target vehicle is automatically controlled to avoid the rear collision risk, to reduce an occurrence probability of a vehicle rear collision accident.

## Description

This application claims priority to Chinese Patent Application No. 202310626641.7, filed with the China National Intellectual Property Administration on May 30, 2023 and entitled "VEHICLE CONTROL METHOD AND RELATED DEVICE", which is incorporated herein by reference in its entirety.

### TECHNICAL FIELD

Embodiments of this application relate to the vehicle field, and in particular, to a vehicle control method and a related device.

### BACKGROUND

In recent years, intelligent driving technologies of vehicles have developed rapidly. However, in a complex traffic scenario, there are still many problems to be resolved in terms of safety of the intelligent driving technologies.

In some traffic environments, for example, a rear large truck/freight vehicle is prone to an emergency braking failure due to a high speed and a heavy vehicle weight, and may collide with a driving vehicle from the rear. Consequently, the driving vehicle is severely collided and squeezed, causing a serious personal casualty and traffic accident. Currently, in an intelligent driving function, a conventional rear collision warning solution is mainly to identify a rear vehicle by using a sensing device (for example, a millimeter-wave radar or a camera) of the driving vehicle during driving of the driving vehicle.

However, even if the driving vehicle can identify a rear vehicle collision risk, the risk may not be handled in time due to a driving status of a driver, and occurrence of a rear collision accident cannot be avoided.

### SUMMARY

Embodiments of this application provide a vehicle control method, to reduce an occurrence probability of a vehicle rear collision accident. Embodiments of this application further provide a corresponding apparatus, a vehicle, a computer-readable storage medium, a computer device, and the like.

A first aspect of this application provides a vehicle control method. The method includes: obtaining first traveling information of a target vehicle and second traveling information of a rear vehicle of the target vehicle; predicting a first collision parameter based on the first traveling information and the second traveling information, where the first collision parameter includes at least one of first remaining time and a first remaining distance for the rear vehicle to collide with the target vehicle; and when the first collision parameter is less than or equal to a first threshold, controlling the target vehicle, to enable the first collision parameter to be greater than the first threshold.

In this application, the target vehicle obtains the second traveling information of the rear vehicle by using a millimeter-wave radar, a lidar, an ultrasonic radar, and/or an out-vehicle camera.

The first collision parameter in this application includes at least one of the first remaining time and the first remaining distance for the rear vehicle to collide with the target vehicle. The first remaining time is remaining time for the rear vehicle to collide with the target vehicle when the first traveling information and the second traveling information remain unchanged. Similarly, the first remaining distance is a remaining distance for the rear vehicle to collide with the target vehicle when the first traveling information and the second traveling information remain unchanged.

In this application, a vehicle speed and steering of the target vehicle are controlled by controlling a vehicle control unit and an electric power steering system of the target vehicle, to avoid a rear collision risk. After the first collision parameter is greater than the first threshold, control on the target vehicle is stopped.

According to the first aspect, the first traveling information of the target vehicle and the second traveling information of the rear vehicle of the target vehicle are obtained, the first collision parameter of the collision between the rear vehicle and the target vehicle is predicted based on the first traveling information and the second traveling information, and when the first collision parameter is less than or equal to a first threshold, the target vehicle is controlled to enable the first collision parameter to be greater than the first threshold. In other words, when the rear collision risk is identified, the target vehicle is automatically controlled to avoid the rear collision risk, to reduce an occurrence probability of a vehicle rear collision accident.

In a possible implementation of the first aspect, the method further includes: sending a first alarm prompt when the target vehicle is in an autonomous driving mode and the first collision parameter is less than or equal to a second threshold, where the second threshold is greater than the first threshold.

In this possible implementation, before the target vehicle is automatically controlled, the alarm prompt is sent to a user in advance, to prompt the user that there is the rear collision risk of the target vehicle. This further reduces the occurrence probability of the vehicle rear collision accident.

In a possible implementation of the first aspect, the method further includes: sending the first alarm prompt when the target vehicle is in a manual driving mode and the first collision parameter is less than or equal to a third threshold, where the third threshold is greater than the second threshold.

In this possible implementation, because there is driver reaction time, when the target vehicle is in the manual driving mode, the alarm prompt is sent to the user earlier, to further reduce the occurrence probability of the vehicle rear collision accident.

In a possible implementation of the first aspect, the method further includes: sending a second alarm prompt when the target vehicle is in the manual driving mode, the target vehicle is not authorized to automatically change to the autonomous driving mode, and the first collision parameter is less than or equal to the second threshold, where prompt intensity of the second alarm prompt is greater than that of the first alarm prompt.

In this possible implementation, when the target vehicle is in the manual driving mode, and the target vehicle is not authorized to automatically change to the autonomous driving mode, the user may not respond when receiving the first alarm prompt, and the target vehicle cannot be automatically controlled. In this case, the first collision parameter may be further reduced. When the first collision parameter is reduced to the second threshold, the second alarm prompt with higher prompt intensity continues to be sent, to further reduce the occurrence probability of the vehicle rear collision accident.

In a possible implementation of the first aspect, the method further includes: obtaining video information of the rear vehicle until the first collision parameter is greater than the second threshold.

In this possible implementation, if a traffic accident occurs subsequently, the user may use the video information as evidence, to improve user experience.

In a possible implementation of the first aspect, the first alarm prompt includes an optical information prompt, a sound prompt, and/or a steering wheel vibration prompt.

In this possible implementation, there are a plurality of prompt manners for the first alarm prompt. This not only improves user experience, but also can warn the user in a targeted manner, to further reduce the occurrence probability of the vehicle rear collision accident.

In a possible implementation of the first aspect, the step of controlling the target vehicle includes: controlling the target vehicle to accelerate when no obstacle exists in a preset distance in front of a lane on which the target vehicle is currently located; or controlling the target vehicle to change to a lane for traveling when the obstacle exists in the preset distance in front of the lane on which the target vehicle is currently located.

In this possible implementation, the target vehicle is controlled, based on a scenario in which the target vehicle is currently located, to enter an escape mode or an avoidance mode. This improves feasibility of the solution.

In a possible implementation of the first aspect, before the step of controlling the target vehicle, the method further includes: canceling a parking gear, a parking function, a lane keeping function, or a cruise function of the target vehicle, or switching the target vehicle to a sport mode, or turning on an emergency flasher of the target vehicle.

In this possible implementation, before the target vehicle is controlled to enter the escape mode or the avoidance mode, the target vehicle further needs to meet a condition for entering the escape mode or the avoidance mode. This improves feasibility of the solution.

In a possible implementation of the first aspect, the method further includes: obtaining a second collision parameter of collision between the rear vehicle and the target vehicle, where the second collision parameter is obtained by the rear vehicle through prediction; and the step of predicting, based on the first traveling information and the second traveling information, the first collision parameter of the collision between the rear vehicle and the target vehicle includes: predicting, based on the first traveling information and the second traveling information, and/or the second collision parameter, the first collision parameter of the collision between the rear vehicle and the target vehicle.

In this possible implementation, the collision parameter is determined based on fused data of the target vehicle and the rear vehicle, to improve accuracy of identifying the rear collision risk.

In a possible implementation of the first aspect, the method further includes: obtaining a third collision parameter of the collision between the rear vehicle and the target vehicle, where the third collision parameter is obtained through prediction by another vehicle in a preset range of the target vehicle; and the step of predicting, based on the first traveling information and the second traveling information, the first collision parameter of the collision between the rear vehicle and the target vehicle includes: predicting, based on the first traveling information and the second traveling information, and/or the third collision parameter, the first collision parameter of the collision between the rear vehicle and the target vehicle.

In this possible implementation, the collision parameter is determined based on fused data of the target vehicle and the another vehicle, to improve accuracy of identifying the rear collision risk.

In a possible implementation of the first aspect, the first traveling information includes at least one of vehicle identification number information, location information, vehicle speed information, heading angle information, acceleration information, deceleration information, braking distance information, and vehicle type information of the target vehicle.

In this possible implementation, the first traveling information includes a plurality of parameters of the target vehicle, so that the first collision parameter is determined, thereby improving feasibility of the solution.

In a possible implementation of the first aspect, the rear vehicle is a freight vehicle or a truck.

In this possible implementation, because rear collision risks of the freight vehicle and the truck are high, and a rear collision risk of a small vehicle or another vehicle is low, the target vehicle obtains the second traveling information of the rear vehicle, and performs rear collision prediction and control only when the target vehicle identifies that the rear vehicle is the freight vehicle or the truck. This reduces computing power payload of the target vehicle and increases endurance mileage.

A second aspect of this application provides a vehicle control apparatus, configured to perform the method in the first aspect or any possible implementation of the first aspect. Specifically, the vehicle control apparatus includes modules or units configured to perform the method in the first aspect or any possible implementation of the first aspect, for example, an obtaining unit, a prediction unit, a control unit, and a sending unit.

A third aspect of this application provides a vehicle. The vehicle is configured to perform the method in the first aspect or any possible implementation of the first aspect.

A fourth aspect of this application provides a computing device. The computing device includes a processor, a memory, and a computer-readable storage medium storing a computer program. The processor is coupled to the computer-readable storage medium. The processor runs computer-executable instructions. When the computer-executable instructions are executed by the processor, the processor performs the method in the first aspect or any possible implementation of the first aspect. Optionally, the computing device may further include an input/output (input/output, I/O) interface, and the computer-readable storage medium storing the computer program may be a memory.

A fifth aspect of this application provides a computer-readable storage medium that stores one or more computer-executable instructions. When the computer-executable instructions are executed by a processor, the processor performs the method in the first aspect or any possible implementation of the first aspect.

A sixth aspect of this application provides a computer program product that stores one or more computer-executable instructions. When the computer-executable instructions are executed by a processor, the processor performs the method in the first aspect or any possible implementation of the first aspect.

A seventh aspect of this application provides a chip system. The chip system includes at least one processor and an interface, the interface is configured to receive data and/or a signal, and the at least one processor is configured to support a computer device in implementing the function in the first aspect or any possible implementation of the first aspect. In a possible design, the chip system may further include a memory. The memory is configured to store program instructions and data that are necessary for the computer device. The chip system may include a chip, or may include a chip and another discrete component.

In embodiments of this application, first traveling information of a target vehicle and second traveling information of a rear vehicle of the target vehicle are obtained, a first collision parameter of collision between the rear vehicle and the target vehicle is predicted based on the first traveling information and the second traveling information, and when the first collision parameter is less than or equal to a first threshold, the target vehicle is controlled to enable the first collision parameter to be greater than the first threshold. In other words, when a rear collision risk is identified, the target vehicle is automatically controlled to avoid the rear collision risk, to reduce an occurrence probability of a vehicle rear collision accident.

### BRIEF DESCRIPTION OF DRAWINGS

FIG. 1 is a diagram of a rear collision scenario;
FIG. 2 is a diagram of an architecture of a vehicle according to an embodiment of this application;
FIG. 3 is a diagram of an embodiment of a vehicle control method according to an embodiment of this application;
FIG. 4 is a diagram of an embodiment of an application scenario of a vehicle control method according to an embodiment of this application;
FIG. 5 is a diagram of another embodiment of an application scenario of a vehicle control method according to an embodiment of this application;
FIG. 6 is a diagram of another embodiment of an application scenario of a vehicle control method according to an embodiment of this application;
FIG. 7 is a diagram of another embodiment of an application scenario of a vehicle control method according to an embodiment of this application;
FIG. 8 is a diagram of an embodiment of a vehicle control apparatus according to an embodiment of this application; and
FIG. 9 is a diagram of an embodiment of a computing device according to an embodiment of this application.

### DESCRIPTION OF EMBODIMENTS

The following describes embodiments of this application with reference to the accompanying drawings. It is clear that the described embodiments are merely some rather than all of the embodiments of this application. A person of ordinary skill in the art may know that with development of technologies and emergence of new scenarios, technical solutions provided in embodiments of this application are also applicable to similar technical problems.

In the specification, claims, and the accompanying drawings of this application, the terms "first", "second", and the like are intended to distinguish similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, apparatus, product, or device that includes a list of steps or units is not necessarily limited to those expressly listed steps or units, but may include other steps or units not expressly listed or inherent to such a process, method, product, or device.

The specific term "example" herein means "used as an example, embodiment or illustration". Any embodiment described as "an example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements and circuits that are well-known to a person skilled in the art are not described in detail, so that the subject matter of this application is highlighted.

The following uses an example to describe an application scenario related to embodiments of this application.

In recent years, intelligent driving technologies of vehicles have developed rapidly. However, in a complex traffic scenario, there are still many problems to be resolved in terms of safety of the intelligent driving technologies. Before the intelligent driving technology develops to a comprehensive autonomous driving phase, there is still a long-term human-machine codriving phase.

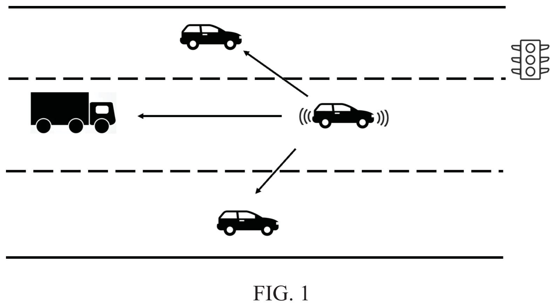

As shown in FIG. 1, in some traffic environments, for example, when a driver drives a target vehicle, in traffic scenarios such as highway congestion and slow driving, sudden rear-end collision in front of the target vehicle, or waiting for a traffic light on an urban road, the driver has weak perception of a rear traffic environment and may not be able to accurately identify a rear collision risk. However, a rear large truck/freight vehicle of the target vehicle is prone to an emergency braking failure due to a high speed and a heavy vehicle weight. If the target vehicle is in a temporary parking state or is at a low speed, the truck/freight vehicle may collide with the driving vehicle from the rear. Consequently, the target vehicle is severely collided and squeezed, causing serious personal casualties and traffic accidents. Currently, in an intelligent driving function, a conventional rear collision warning solution is mainly to identify a rear vehicle of the target vehicle by using a sensing device (for example, a millimeter-wave radar or a camera) of the target vehicle during driving of the target vehicle.

However, depending only on traffic environment perception of the target vehicle, in traffic environments such as smoke/heavy fog/ heavy rain/heavy snow, or a rear traffic environment blocked by another large truck or road construction fence, the target vehicle cannot accurately identify a rear large truck. Consequently, a rear collision warning is inaccurate, and a false alarm may be given. In addition, even if the target vehicle can identify a rear vehicle collision risk, the risk may not be handled in time due to a driving status of the driver, and occurrence of a rear collision accident cannot be avoided.

In view of this, embodiments of this application provide a vehicle control method, to reduce an occurrence probability of a vehicle rear collision accident. Embodiments of this application further provide a corresponding apparatus, a vehicle, a computer-readable storage medium, a computer device, and the like. Details are separately described in the following.

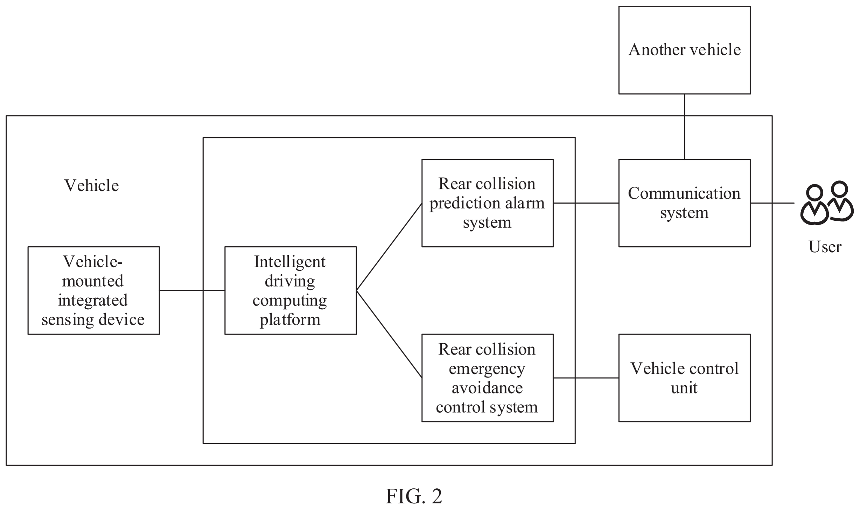

As shown in FIG. 2, a vehicle control method provided in an embodiment of this application is applied to a vehicle. The vehicle includes a rear collision prediction alarm system, a rear collision emergency avoidance control system, a vehicle-mounted integrated sensing device, a communication system, an intelligent driving computing platform, and a vehicle control unit.

The vehicle-mounted integrated sensing device includes a device that is configured to sense vehicle environment information, like a millimeter-wave radar, a lidar, an ultrasonic radar, and/or an out-vehicle camera. The communication system includes devices used for data exchange, such as a 5th generation mobile communication technology (5th generation mobile communication technology, 5G) communication device, a vehicle to X (vehicle to X, V2X) communication device, a telematics-BOX (telematics-BOX, TBOX) communication device, an on-board unit (on-board unit, OBU), and an in-vehicle infotainment (in-vehicle infotainment, IVI) system. The foregoing devices or systems in the vehicle are configured to jointly implement the vehicle control method provided in embodiments of this application. The rear collision prediction alarm system, the rear collision emergency avoidance control system, and the intelligent driving computing platform may be understood as newly added systems or platforms in embodiments of this application, and another device, system, or unit is an original device of the vehicle.

It should be understood that, the vehicle in embodiments of this application is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not specifically limited in embodiments of this application.

The following describes, with reference to the foregoing application scenario, the vehicle control method provided in embodiments of this application.

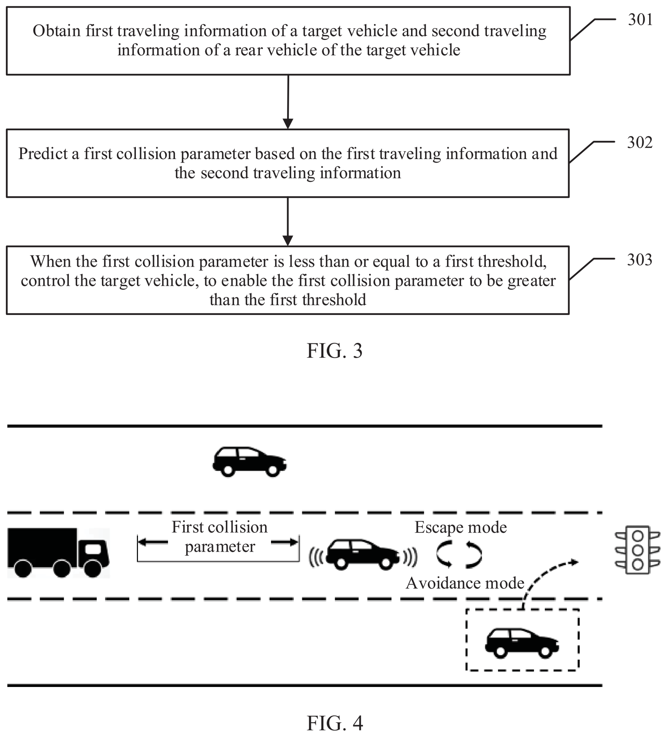

As shown in FIG. 3, an embodiment of the vehicle control method according to an embodiment of this application includes the following steps.

301: Obtain first traveling information of a target vehicle and second traveling information of a rear vehicle of the target vehicle.

For example, an example in which the vehicle control method provided in this embodiment of this application is applied to the vehicle shown in FIG. 2 is used for description. In other words, the target vehicle is the vehicle shown in FIG. 2.

The target vehicle obtains the second traveling information of the rear vehicle by using a millimeter-wave radar, a lidar, an ultrasonic radar, and/or an out-vehicle camera in the vehicle-mounted integrated sensing device. The second traveling information includes at least one of vehicle identification number (vehicle identification number, VIN) information, location information, vehicle speed information, heading angle information, acceleration information, deceleration information, braking distance information, and vehicle type information of the rear vehicle.

In addition, the target vehicle further obtains the first traveling information of the target vehicle by using a device of the target vehicle. Similarly, the first traveling information includes at least one of vehicle identification number information, location information, vehicle speed information, heading angle information, acceleration information, deceleration information, braking distance information, and vehicle type information of the target vehicle.

For example, the target vehicle obtains the first traveling information of the target vehicle and the second traveling information of the rear vehicle, as shown in Table 1.

**Table 1**

| | First traveling information | Second traveling information |
|---|---|---|
| Vehicle speed information | 10 km/h | 60 km/h |
| Acceleration information | 0 m/s² | 10 m/s² |
| Braking distance information | 1m | 50 m |
| Vehicle type information | Small vehicle | Large freight vehicle |

Optionally, the rear vehicle is a freight vehicle or a truck. Because rear collision risks of the freight vehicle and the truck are high, and a rear collision risk of the small vehicle or another vehicle is low, the target vehicle obtains the second traveling information of the rear vehicle and performs rear collision prediction and control only when the target vehicle identifies that the rear vehicle is the freight vehicle or the truck. This reduces computing power payload of the target vehicle and increases endurance mileage.

It should be understood that an occasion for obtaining the second traveling information may be selected by a user (driver). If the user prefers safety, the user may obtain second traveling information of all rear vehicles of the target vehicle by using the IVI. If the user prefers the endurance mileage, the user may choose, by using the IVI, to obtain the second traveling information of the rear vehicle only when it is identified that the rear vehicle is the freight vehicle or the truck, and perform subsequent step 302 and step 303. Otherwise, the target vehicle does not obtain the second traveling information, and does not perform step 302 and step 303.

302: Predict a first collision parameter based on the first traveling information and the second traveling information.

After obtaining the first traveling information and the second traveling information, the vehicle-mounted integrated sensing device of the target vehicle sends the first traveling information and the second traveling information to the intelligent driving computing platform of the target vehicle. The intelligent driving computing platform of the target vehicle is configured to predict the first collision parameter based on the first traveling information and the second traveling information.

The first collision parameter includes at least one of first remaining time and a first remaining distance for the rear vehicle to collide with the target vehicle. The first remaining time is remaining time for the rear vehicle to collide with the target vehicle when the first traveling information and the second traveling information remain unchanged. Similarly, the first remaining distance is a remaining distance for the rear vehicle to collide with the target vehicle when the first traveling information and the second traveling information remain unchanged. In this embodiment of this application, an example in which the first collision parameter is the first remaining time is used for description.

Optionally, the first collision parameter may be further optimized more accurately by obtaining more data, which is separately described below.

### 1. Prediction by the rear vehicle

In step 301, the target vehicle obtains, by using the V2X communication device, a second collision parameter obtained by the rear vehicle through prediction. The rear vehicle also obtains the traveling information of the rear vehicle and the traveling information of the target vehicle, obtains the second collision parameter through prediction, and sends the second collision parameter to the target vehicle through V2X. In this case, the intelligent driving computing platform of the target vehicle obtains the first collision parameter through prediction based on the first traveling information and the second traveling information, and/or the second collision parameter.

For example, the second collision parameter is 3 seconds, and 2 seconds are obtained through prediction based on the first traveling information and the second traveling information. An average value of the two, namely, 2.5 seconds, is obtained as the first collision parameter, that is, the remaining time for the rear vehicle to collide with the target vehicle is 2.5 seconds.

### 2. Prediction by another vehicle

In step 301, the target vehicle obtains, by using the V2X communication device, a third collision parameter obtained by another vehicle through prediction. The another vehicle is a vehicle in a preset range of the target vehicle. The another vehicle obtains the traveling information of the rear vehicle and the traveling information of the target vehicle, obtains the third collision parameter through prediction, and sends the third collision parameter to the target vehicle through V2X. In this case, the intelligent driving computing platform of the target vehicle obtains the first collision parameter through prediction based on the first traveling information and the second traveling information, and/or the third collision parameter.

For example, the third collision parameter is 4 seconds, and 2 seconds are obtained through prediction based on the first traveling information and the second traveling information. An average value of the two, namely, 3 seconds, is obtained as the first collision parameter, that is, the remaining time for the rear vehicle to collide with the target vehicle is 3 seconds.

### 3. Fused prediction

Based on the foregoing two cases, the target vehicle may simultaneously obtain both the second collision parameter and the third collision parameter, and predict, based on the first traveling information, the second traveling information, the second collision parameter, and/or the third collision parameter, the first collision parameter of the collision between the rear vehicle and the target vehicle.

For example, the second collision parameter is 3 seconds, and the third collision parameter is 4 seconds. However, 2 seconds are obtained through prediction based on the first traveling information and the second traveling information. An average value of the three, namely, 3 seconds, is obtained as the first collision parameter, that is, the remaining time for the rear vehicle to collide with the target vehicle is 3 seconds.

303: When the first collision parameter is less than or equal to a first threshold, control the target vehicle, to enable the first collision parameter to be greater than the first threshold.

After predicting the first collision parameter, the intelligent driving computing platform of the target vehicle sends the first collision parameter to the rear collision emergency avoidance control system of the target vehicle. When the first collision parameter is less than or equal to the first threshold, the rear collision emergency avoidance control system controls the vehicle control unit of the target vehicle to avoid danger.

For example, the vehicle control unit includes a vehicle control unit (vehicle control unit, VCU), an electric power steering (electric power steering, EPS) system, and the like of the target vehicle. The rear collision emergency avoidance control system controls a vehicle speed and steering of the target vehicle by controlling the VCU and the EPS of the target vehicle, to avoid a rear collision risk.

Specifically, the target vehicle may be controlled, based on an actual situation of the target vehicle, to enter an escape mode or an avoidance mode. When no obstacle exists in a preset distance in front of a lane on which the target vehicle is currently located, the target vehicle is controlled to enter the escape mode, that is, the target vehicle is controlled to accelerate until the first collision parameter is greater than the first threshold. When the obstacle exists in the preset distance in front of the lane on which the target vehicle is currently located, the target vehicle is controlled to enter the avoidance mode, that is, the target vehicle is controlled to change to a lane for traveling until the first collision parameter is greater than the first threshold.

The obstacle includes a vehicle, a road test device (a traffic light), a road obstacle, and a pedestrian.

Optionally, before the target vehicle is controlled to enter the escape mode or the avoidance mode, to enable the target vehicle to have a condition for entering the escape mode or the avoidance mode, the rear collision emergency avoidance control system may further cancel a parking gear, a parking function, a lane keeping function, or a cruise function of the target vehicle, or reduce priorities of the lane keeping function and the cruise function (including cruise control, adaptive cruise and full speed adaptive cruise), or switch the target vehicle to a sport (sport) mode (for example, when the target vehicle needs to be controlled to enter the escape mode), or turn on an emergency flasher of the target vehicle, to remind another vehicle around the target vehicle.

Optionally, after predicting the first collision parameter, the intelligent driving computing platform of the target vehicle may further send the first collision parameter to the rear collision prediction alarm system of the target vehicle, to generate an alarm for the user. The sending of the alarm prompt is classified into a plurality of cases, which are described in the following sections.

Specifically, a first alarm prompt is sent when the target vehicle is in an autonomous driving mode and the first collision parameter is less than or equal to a second threshold. The second threshold is greater than the first threshold. The first alarm prompt is sent when the target vehicle is in a manual driving mode and the first collision parameter is less than or equal to a third threshold. The third threshold is greater than the second threshold. A second alarm prompt is sent when the target vehicle is in the manual driving mode, the target vehicle is not authorized to automatically change to the autonomous driving mode, and the first collision parameter is less than or equal to the second threshold. Prompt intensity of the second alarm prompt is greater than that of the first alarm prompt.

For example, the first threshold is 1 second, the second threshold is 3 seconds, and the third threshold is 6 seconds. When the target vehicle is in the autonomous driving mode, the rear collision emergency avoidance control system may directly automatically control the target vehicle. Therefore, when the first collision parameter is less than or equal to the second threshold, the rear collision prediction alarm system sends the first alarm prompt, to remind the user that there is a rear collision risk.

However, when the target vehicle is in the manual driving mode, reaction time of the user further needs to be considered. When the first collision parameter is less than or equal to the third threshold, the rear collision prediction alarm system needs to send the first alarm prompt, and the user is reminded earlier, in comparison with a case in which the target vehicle is in the autonomous driving mode. The user may control the target vehicle or authorize the target vehicle to enter the autonomous driving mode based on the first alarm prompt.

Further, if the target vehicle has been authorized in advance to automatically change to the autonomous driving mode, when the first collision parameter is less than or equal to the first threshold, the rear collision emergency avoidance control system directly automatically controls the target vehicle. However, when the target vehicle is not authorized to automatically change to the autonomous driving mode, the user may not respond when receiving the first alarm prompt, and the rear collision prediction alarm system cannot automatically control the target vehicle, the first collision parameter may be further reduced. When the first collision parameter is reduced to the second threshold, a second alarm prompt is sent to the rear collision prediction alarm system. Prompt intensity of the second alarm prompt is greater than that of the first alarm prompt.

It should be understood that the third threshold is not directly associated with the second threshold, and the third threshold is not limited to be greater than the second threshold. In addition, as determining conditions for performing steps, the first threshold to the third threshold in this embodiment of this application may be replaced, provided that the third threshold is greater than the first threshold and the second threshold is greater than the first threshold. For example, when the first collision parameter is reduced to the first threshold, the second alarm prompt is sent.

Optionally, the first alarm prompt includes an optical information prompt, a sound prompt, and/or a steering wheel vibration prompt, and the second alarm prompt includes an optical information prompt, a sound prompt, and/or a steering wheel vibration prompt.

For example, the optical information prompt may be blinking red light on a screen of the IVI, and the sound prompt may be sound information "Pay attention, there is a rear collision risk" sent by the IVI. Because the prompt intensity of the second alarm prompt is greater than that of the first alarm prompt, the second alarm prompt includes three prompts: the optical information prompt, the sound prompt, and the steering wheel vibration prompt, and the first alarm prompt includes only the optical information prompt.

Optionally, when the first collision parameter is less than or equal to the second threshold, the vehicle-mounted fusion sensing device of the target vehicle further starts to obtain video information of the rear vehicle until the first collision parameter is greater than the second threshold. In other words, the target vehicle obtains the video information of the rear vehicle in a time period in which the first collision parameter is less than or equal to the second threshold. If a traffic accident occurs subsequently, the user may use the video information as evidence. It should be understood that the second threshold may be replaced with the third threshold or another value. An occasion for obtaining the video information of the rear vehicle is not limited in this embodiment of this application.

Optionally, after the rear collision emergency avoidance control system controls the target vehicle, automatic control may be maintained in a preset time period. During the automatic control period, if the first collision parameter is less than the second threshold or the third threshold again, the first alarm prompt or the second alarm prompt is not sent, and control is directly performed.

The following further describes in detail the vehicle control method provided in embodiments of this application with reference to several examples.

### Example 1

As shown in FIG. 4, in this scenario, there is a large truck suspected to collide at the rear on a lane of the target vehicle, for example, there is no other type of vehicle in front of this lane, rear collision emergency avoidance control is the escape mode. The following separately describes different driving modes of the target vehicle.
1. The target vehicle is in the autonomous driving mode.

When the first collision parameter is less than or equal to the second threshold, the rear collision prediction alarm system initiates the first alarm prompt to the user, and a system plays a voice "There is a large truck collision risk at the rear of the current lane, and please drive away quickly" to remind the driver.

Further, the rear collision emergency avoidance control system turns on the emergency flasher of the target vehicle, cancels automatic parking, cancels P gear parking, cancels braking force such as footbrake/handbrake, or cancels the lane keeping function or the adaptive cruise function, or lowers a priority, sets a power mode of the target vehicle to the sport mode, and enables the target vehicle to enter a monitoring state in the escape mode (monitoring a current lane status in real time, and calculating the first collision parameter in real time), to enable the target vehicle to enter the escape mode (forward acceleration) and keep a safety distance from a vehicle in front of the vehicle. If another vehicle in front of the target vehicle enters the lane or the vehicle parks at a traffic light stop line, the vehicle is adjusted to enter the monitoring state in the avoidance mode (for example, if the target vehicle parks at the traffic light stop line, an avoidance mode strategy is rightward lane change).

2. The target vehicle is in the manual driving mode.

Because there is driver reaction time, when the first collision parameter is less than or equal to the third threshold, the first alarm prompt is sent. When the first collision parameter is less than or equal to the first threshold, the rear collision emergency avoidance control system changes drive permission of the target vehicle, to adjust to the autonomous driving mode based on a result record that the user has confirmed authorization for takeover by the rear collision emergency avoidance control system. On the contrary, when the first collision parameter is less than or equal to the second threshold, the rear collision prediction alarm system initiates the second alarm prompt to the user.

When the first collision parameter is restored to be greater than the first threshold, the rear collision emergency avoidance control system enables the target vehicle to enter the monitoring state in the escape mode, and prompts the driver to take over the vehicle.

### Example 2

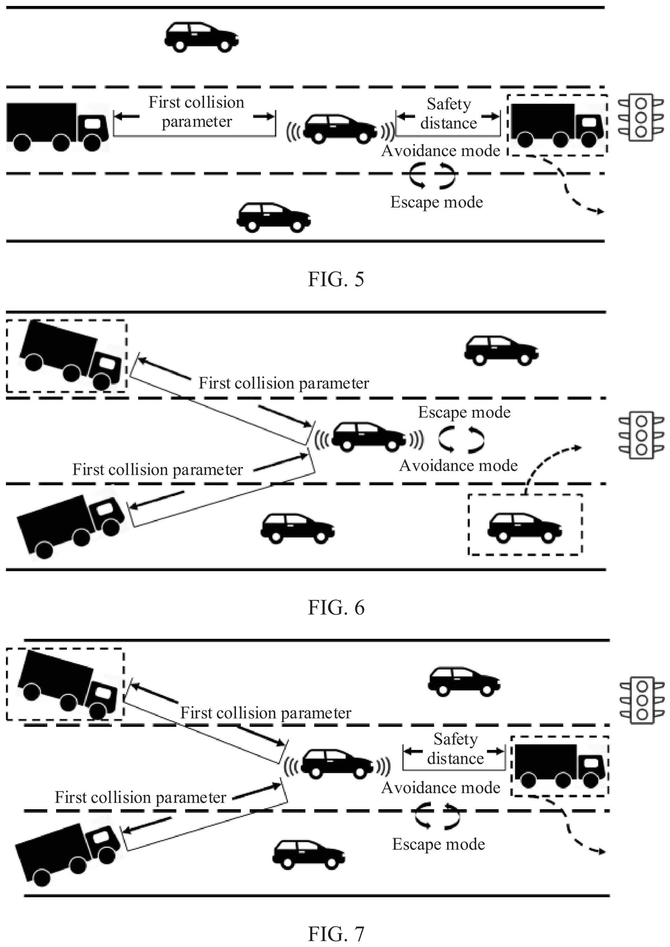

As shown in FIG. 5, in this scenario, there is a large truck suspected to collide at the rear on a lane of the target vehicle, for example, there is another vehicle in front of this lane, because a safety distance between the vehicle and the front vehicle needs to be ensured, rear collision emergency avoidance control is the avoidance mode. The following separately describes different driving modes of the target vehicle.
1. The target vehicle is in the autonomous driving mode.

When the first collision parameter is less than or equal to the second threshold, the rear collision prediction alarm system initiates the first alarm prompt to the user, and a system plays a voice "There is a large truck collision risk at the rear of the current lane, and please drive away quickly" to remind the driver.

Further, the rear collision emergency avoidance control system turns on the emergency flasher of the target vehicle, cancels automatic parking, cancels P gear parking, cancels braking force such as footbrake/handbrake, or cancels the lane keeping function or the adaptive cruise function, or lowers a priority, sets a power mode of the target vehicle to the sport mode, and enables the target vehicle to enter a monitoring state in the avoidance mode (monitoring a current lane status in real time, and calculating feasibility of leftward and rightward lane change, and predefined lane change locations), to enable the target vehicle to enter the avoidance mode. If another vehicle in front of the target vehicle changes the lane and switches out of the lane, the safety distance between the vehicle and the front vehicle can be ensured. In this case, the target vehicle is adjusted to enter the monitoring state in the escape mode.

2. The target vehicle is in the manual driving mode.

Because there is driver reaction time, when the first collision parameter is less than or equal to the third threshold, the first alarm prompt is sent. When the first collision parameter is less than or equal to the first threshold, the rear collision emergency avoidance control system changes drive permission of the target vehicle, to adjust to the autonomous driving mode based on a result record that the user has confirmed authorization for takeover by the rear collision emergency avoidance control system. On the contrary, when the first collision parameter is less than or equal to the second threshold, the rear collision prediction alarm system initiates the second alarm prompt to the user.

When the first collision parameter is restored to be greater than the first threshold, the rear collision emergency avoidance control system enables the target vehicle to enter the monitoring state in the avoidance mode, and prompts the driver to take over the vehicle.

### Example 3

As shown in FIG. 6, in this scenario, there are large trucks suspected to collide at the rear on adjacent lanes of the target vehicle, for example, there is no other vehicle in front of this lane, rear collision emergency avoidance control is the escape mode.

For a specific implementation method of Example 3, refer to Example 1. A difference lies only in that the rear vehicle in Example 1 is a vehicle on this lane, and the rear vehicles in Example 3 are two vehicles on adjacent lanes. Only a method for determining the first collision parameter is different. Details are not described in this embodiment of this application again.

### Example 4

As shown in FIG. 7, in this scenario, there are large trucks suspected to collide at the rear on adjacent lanes of the target vehicle, for example, there is another vehicle in front of this lane, and rear collision emergency avoidance control is the avoidance mode.

For a specific implementation method of Example 4, refer to Example 2. A difference lies only in that the rear vehicle in Example 2 is a vehicle on this lane, and the rear vehicles in Example 4 are two vehicles on adjacent lanes. Only a method for determining the first collision parameter is different. Details are not described in this embodiment of this application again.

It can be learned from the foregoing embodiments that beneficial effect brought by embodiments of this application includes but is not limited to the following three points:
(1) When a rear collision risk is identified, the target vehicle is automatically controlled to avoid the rear collision risk, to reduce an occurrence probability of a rear collision accident of the vehicle.
(2) In different scenarios, different manners are used to prompt the user that there is the rear collision risk, to further reduce the occurrence probability of the rear collision accident of the vehicle.
(3) The collision parameter is determined based on fused data of the target vehicle, the rear vehicle, and the another vehicle, to improve accuracy of identifying the rear collision risk.

The foregoing describes the vehicle control method provided in embodiments of this application. The following describes a vehicle control apparatus provided in embodiments of this application with reference to the accompanying drawings.

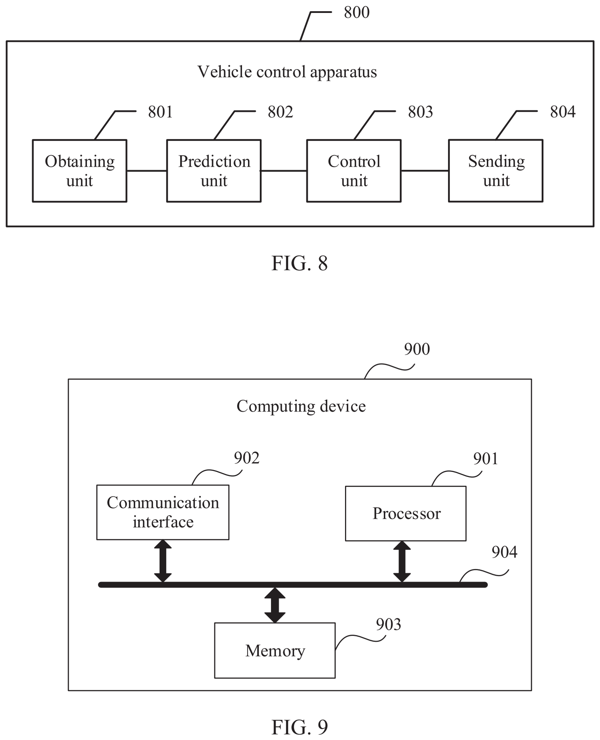

As shown in FIG. 8, an embodiment of a vehicle control apparatus 800 provided in an embodiment of this application includes:
an obtaining unit 801, configured to obtain first traveling information of a target vehicle and second traveling information of a rear vehicle of the target vehicle, where the obtaining unit 801 may perform step 301 in the foregoing method embodiment;
a prediction unit 802, configured to predict a first collision parameter based on the first traveling information and the second traveling information, where the first collision parameter includes at least one of first remaining time and a first remaining distance for the rear vehicle to collide with the target vehicle, and the prediction unit 802 may perform step 302 in the foregoing method embodiment; and
a control unit 803, configured to: when the first collision parameter is less than or equal to a first threshold, control the target vehicle, to enable the first collision parameter to be greater than the first threshold. The control unit 803 can perform step 303 in the foregoing method embodiment.

In embodiments of this application, the obtaining unit 801 obtains the first traveling information of the target vehicle and the second traveling information of the rear vehicle of the target vehicle, the prediction unit 802 predicts the first collision parameter of collision between the rear vehicle and the target vehicle based on the first traveling information and the second traveling information, and when the first collision parameter is less than or equal to the first threshold, the control unit 803 controls the target vehicle to enable the first collision parameter to be greater than the first threshold. In other words, when a rear collision risk is identified, the target vehicle is automatically controlled to avoid the rear collision risk, to reduce an occurrence probability of a vehicle rear collision accident.

Optionally, the vehicle control apparatus 800 further includes a sending unit 804. The sending unit 804 is configured to send a first alarm prompt when the target vehicle is in an autonomous driving mode and the first collision parameter is less than or equal to a second threshold. The second threshold is greater than the first threshold.

Optionally, the sending unit 804 is further configured to send the first alarm prompt when the target vehicle is in a manual driving mode and the first collision parameter is less than or equal to a third threshold. The third threshold is greater than the second threshold.

Optionally, the sending unit 804 is further configured to send a second alarm prompt when the target vehicle is in the manual driving mode, the target vehicle is not authorized to automatically change to the autonomous driving mode, and the first collision parameter is less than or equal to the second threshold. Prompt intensity of the second alarm prompt is greater than that of the first alarm prompt.

Optionally, the obtaining unit 801 is further configured to obtain video information of the rear vehicle until the first collision parameter is greater than the second threshold.

Optionally, the first alarm prompt includes an optical information prompt, a sound prompt, and/or a steering wheel vibration prompt.

Optionally, the control unit 803 is specifically configured to control the target vehicle to accelerate when no obstacle exists in a preset distance in front of a lane on which the target vehicle is currently located; or control the target vehicle to change to a lane for traveling when the obstacle exists in the preset distance in front of the lane on which the target vehicle is currently located.

Optionally, the control unit 803 is further configured to cancel a parking gear, a parking function, a lane keeping function, or a cruise function of the target vehicle, or switch the target vehicle to a sport mode, or turn on an emergency flasher of the target vehicle.

Optionally, the obtaining unit 801 is further configured to obtain a second collision parameter of collision between the rear vehicle and the target vehicle. The second collision parameter is obtained by the rear vehicle through prediction. The prediction unit 802 is specifically configured to predict, based on the first traveling information and the second traveling information, and/or the second collision parameter, the first collision parameter of the collision between the rear vehicle and the target vehicle.

Optionally, the obtaining unit 801 is further configured to obtain a third collision parameter of the collision between the rear vehicle and the target vehicle. The third collision parameter is obtained through prediction by another vehicle in a preset range of the target vehicle. The prediction unit 802 is specifically configured to predict, based on the first traveling information and the second traveling information, and/or the third collision parameter, the first collision parameter of the collision between the rear vehicle and the target vehicle.

Optionally, the first traveling information includes at least one of vehicle identification number information, location information, vehicle speed information, heading angle information, acceleration information, deceleration information, braking distance information, and vehicle type information of the target vehicle.

Optionally, the rear vehicle is a freight vehicle or a truck.

For understanding of the vehicle control apparatus 800 provided in this embodiment of this application, refer to corresponding content in the foregoing vehicle control method embodiment. Details are not described herein again.

It should be understood that division of the units in the vehicle control apparatus 800 (referred to as an apparatus) is merely division of logical functions. During actual implementation, all or some units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of a part or all of units may be implemented by designing the hardware circuits. The hardware circuits may be understood as one or more processors. For example, in an implementation, the hardware circuit is an application-specific integrated circuit (application-specific integrated circuit, ASIC), and the functions of a part or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of a part or all of the foregoing units. All units of the foregoing apparatus may be implemented in a form of software invoked by the processor, or all units may be implemented in a form of hardware circuits, or a part of units may be implemented in a form of software invoked by the processor, and a remaining part may be implemented in a form of hardware circuit.

In this embodiment of this application, the processor is a circuit that has a signal processing capability. In an implementation, the processor may be a circuit that has an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of the hardware circuit. The logical relationship of the hardware circuit is fixed or reconfigurable. For example, the processor is an application-specific integrated circuit (application-specific integrated circuit, ASIC) or a hardware circuit, for example, the FPGA, implemented by a programmable logic device (programmable logic device, PLD). In the reconfigurable hardware circuit, a process in which the processor loads a configuration document to implement hardware circuit configuration may be understood as a process in which the processor loads instructions to implement functions of a part or all of the foregoing units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or a part of the units of the foregoing apparatus may be integrated, or may be implemented independently. In an implementation, these units are integrated together and implemented in a form of system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

An embodiment of this application further provides a vehicle. The vehicle is the vehicle shown in FIG. 2, or the vehicle includes the vehicle control apparatus shown in FIG. 8, or the vehicle includes a computing device 900. FIG. 9 is a diagram of a possible logical structure of a computing device 900 according to an embodiment of this application. The computing device 900 includes a processor 901, a communication interface 902, a memory 903, and a bus 904. The processor 901 may include a CPU, or at least one of a CPU, a GPU, an NPU, and another type of processor. The processor 901, the communication interface 902, and the memory 903 are connected to each other through the bus 904. In this embodiment of this application, the processor 901 is configured to control and manage an action of the computing device 900. For example, the processor 901 is configured to perform the steps 301 to 303 in FIG. 3 and/or another process of a technology described in this specification. The communication interface 902 is configured to support the computing device 900 in performing communication. The memory 903 is configured to store program code and data of the computing device 900.

The processor 901 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 904 may be a peripheral component interconnect (Peripheral Component Interconnect, PCI) bus or an extended industry standard architecture (Extended Industry Standard Architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

In another embodiment of this application, a computer-readable storage medium is further provided. The computer-readable storage medium stores computer-executable instructions. When at least one processor of a device executes the computer-executable instructions, the device performs the vehicle control method described in the foregoing embodiments in FIG. 3 to FIG. 7.

In another embodiment of this application, a computer program product is further provided. The computer program product includes computer-executable instructions, and the computer-executable instructions are stored in a computer-readable storage medium. At least one processor of a device may read the computer-executable instructions from the computer-readable storage medium. When the at least one processor executes the computer-executable instructions, the device is enabled to perform the vehicle control method described in the foregoing embodiments in FIG. 3 to FIG. 7.

In another embodiment of this application, a chip system is further provided. The chip system includes at least one processor and an interface. The interface is configured to receive data and/or a signal. The at least one processor is configured to support implementation of the vehicle control method described in the foregoing embodiments in FIG. 3 to FIG. 7. In a possible design, the chip system may further include a memory. The memory is configured to store program instructions and data that are necessary for the computer device. The chip system may include a chip, or may include a chip and another discrete component.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of software product. The computer software product is stored in a storage medium and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A vehicle control method, comprising:
obtaining first traveling information of a target vehicle and second traveling information of a rear vehicle of the target vehicle;
predicting a first collision parameter based on the first traveling information and the second traveling information, wherein the first collision parameter comprises at least one of first remaining time and a first remaining distance for the rear vehicle to collide with the target vehicle; and
when the first collision parameter is less than or equal to a first threshold, controlling the target vehicle, to enable the first collision parameter to be greater than the first threshold.

2. The method according to claim 1, wherein the method further comprises:
sending a first alarm prompt when the target vehicle is in an autonomous driving mode and the first collision parameter is less than or equal to a second threshold, wherein the second threshold is greater than the first threshold.

3. The method according to claim 2, wherein the method further comprises:
sending the first alarm prompt when the target vehicle is in a manual driving mode and the first collision parameter is less than or equal to a third threshold, wherein the third threshold is greater than the second threshold.

4. The method according to claim 2 or 3, wherein the method further comprises:
sending a second alarm prompt when the target vehicle is in the manual driving mode, the target vehicle is not authorized to automatically change to the autonomous driving mode, and the first collision parameter is less than or equal to the second threshold, wherein prompt intensity of the second alarm prompt is greater than that of the first alarm prompt.

5. The method according to any one of claims 2 to 4, wherein the method further comprises:
obtaining video information of the rear vehicle until the first collision parameter is greater than the second threshold.

6. The method according to any one of claims 2 to 5, wherein the first alarm prompt comprises an optical information prompt, a sound prompt, and/or a steering wheel vibration prompt.

7. The method according to any one of claims 1 to 6, wherein controlling the target vehicle comprises:
controlling the target vehicle to accelerate when no obstacle exists in a preset distance in front of a lane on which the target vehicle is currently located; or
controlling the target vehicle to change to a lane for traveling when the obstacle exists in the preset distance in front of the lane on which the target vehicle is currently located.

8. The method according to any one of claims 1 to 7, wherein before controlling the target vehicle, the method further comprises:
canceling a parking gear, a parking function, a lane keeping function, or a cruise function of the target vehicle; or
switching the target vehicle to a sport mode; or
turning on an emergency flasher of the target vehicle.

9. The method according to any one of claims 1 to 8, wherein the method further comprises:
obtaining a second collision parameter of collision between the rear vehicle and the target vehicle, wherein the second collision parameter is obtained by the rear vehicle through prediction; and
predicting, based on the first traveling information and the second traveling information, the first collision parameter of the collision between the rear vehicle and the target vehicle comprises:
predicting, based on the first traveling information and the second traveling information, and/or the second collision parameter, the first collision parameter of the collision between the rear vehicle and the target vehicle.

10. The method according to any one of claims 1 to 9, wherein the method further comprises:
obtaining a third collision parameter of the collision between the rear vehicle and the target vehicle, wherein the third collision parameter is obtained through prediction by another vehicle in a preset range of the target vehicle; and
predicting, based on the first traveling information and the second traveling information, the first collision parameter of the collision between the rear vehicle and the target vehicle comprises:
predicting, based on the first traveling information and the second traveling information, and/or the third collision parameter, the first collision parameter of the collision between the rear vehicle and the target vehicle.

11. The method according to any one of claims 1 to 10, wherein the first traveling information comprises at least one of vehicle identification number information, location information, vehicle speed information, heading angle information, acceleration information, deceleration information, braking distance information, and vehicle type information of the target vehicle.

12. The method according to any one of claims 1 to 11, wherein the rear vehicle is a freight vehicle or truck.

13. A vehicle control apparatus, comprising:
an obtaining unit, configured to obtain first traveling information of a target vehicle and second traveling information of a rear vehicle of the target vehicle;
a prediction unit, configured to predict a first collision parameter based on the first traveling information and the second traveling information, wherein the first collision parameter comprises at least one of first remaining time and a first remaining distance for the rear vehicle to collide with the target vehicle; and
a control unit, configured to: when the first collision parameter is less than or equal to a first threshold, control the target vehicle, to enable the first collision parameter to be greater than the first threshold.

14. The apparatus according to claim 13, wherein the apparatus further comprises:
a sending unit, configured to send a first alarm prompt when the target vehicle is in an autonomous driving mode and the first collision parameter is less than or equal to a second threshold, wherein the second threshold is greater than the first threshold.

15. The apparatus according to claim 14, wherein the sending unit is further configured to send the first alarm prompt when the target vehicle is in a manual driving mode and the first collision parameter is less than or equal to a third threshold, wherein the third threshold is greater than the second threshold.

16. The apparatus according to claim 14 or 15, wherein the sending unit is further configured to send a second alarm prompt when the target vehicle is in the manual driving mode, the target vehicle is not authorized to automatically change to the autonomous driving mode, and the first collision parameter is less than or equal to the second threshold, wherein prompt intensity of the second alarm prompt is greater than that of the first alarm prompt.

17. The apparatus according to any one of claims 14 to 16, wherein the obtaining unit is further configured to obtain video information of the rear vehicle until the first collision parameter is greater than the second threshold.

18. The apparatus according to any one of claims 14 to 17, wherein the first alarm prompt comprises an optical information prompt, a sound prompt, and/or a steering wheel vibration prompt.

19. The apparatus according to any one of claims 13 to 18, wherein the control unit is specifically configured to: control the target vehicle to travel with acceleration when no obstacle exists in a preset distance in front of a lane on which the target vehicle is currently located; or control the target vehicle to change to a lane for traveling when the obstacle exists in the preset distance in front of the lane on which the target vehicle is currently located.

20. The apparatus according to any one of claims 13 to 19, wherein the control unit is further configured to: cancel a parking gear, a parking function, a lane keeping function, or a cruise function of the target vehicle, or switch the target vehicle to a sport mode, or turn on an emergency flasher of the target vehicle.

21. The apparatus according to any one of claims 13 to 20, wherein the obtaining unit is further configured to obtain a second collision parameter of collision between the rear vehicle and the target vehicle, wherein the second collision parameter is obtained by the rear vehicle through prediction; and
the prediction unit is specifically configured to predict, based on the first traveling information and the second traveling information, and/or the second collision parameter, the first collision parameter of the collision between the rear vehicle and the target vehicle.

22. The apparatus according to any one of claims 13 to 21, wherein the obtaining unit is further configured to obtain a third collision parameter of the collision between the rear vehicle and the target vehicle, wherein the third collision parameter is obtained through prediction by another vehicle in a preset range of the target vehicle; and
the prediction unit is specifically configured to predict, based on the first traveling information and the second traveling information, and/or the third collision parameter, the first collision parameter of the collision between the rear vehicle and the target vehicle.

23. The apparatus according to any one of claims 13 to 22, wherein the first traveling information comprises at least one of vehicle identification number information, location information, vehicle speed information, heading angle information, acceleration information, deceleration information, braking distance information, and vehicle type information of the target vehicle.

24. The apparatus according to any one of claims 13 to 23, wherein the rear vehicle is a freight vehicle or truck.

25. A vehicle, wherein the vehicle is configured to perform the method according to any one of claims 1 to 12.

26. A computing device, comprising a processor, wherein computer-executable instructions are run on the processor, and when the computer-executable instructions are executed by the processor, the processor performs the method according to any one of claims 1 to 12.

27. A computer-readable storage medium, wherein the computer-readable storage medium stores a computer program, and when the computer program is executed by a processor, the method according to any one of claims 1 to 12 is implemented.
